# EUROPÄISCHE PATENTSCHRIFT

(11) **EP 1 554 329 B1**
(45) Veröffentlichungstag und Bekanntmachung des Hinweises auf die Patenterteilung: **04.04.2012**
(21) Anmeldenummer: 03748118.1
(22) Anmeldetag: 06.10.2003
(51) Int. Cl.: C08G 18/40, C08G 18/63, C08G 18/48

(54) **VERFAHREN ZUR HERSTELLUNG VON POLYURETHAN-HARTSCHAUMSTOFFEN MIT GRAFTPOLYOLEN**
METHOD FOR PRODUCING RIGID POLYURETHANE FOAMS BY MEANS OF GRAFT POLYHYDRIC ALCOHOLS
PROCEDE POUR FABRIQUER DES MOUSSES DE POLYURETHANNE RIGIDES AVEC DES POLYOLS GREFFES

(30) Priorität: 15.10.2002 DE 10248084
(43) Veröffentlichungstag der Anmeldung: 20.07.2005
(73) Patentinhaber: BASF SE, 67056 Ludwigshafen (DE)
(72) Erfinder: ZASCHKE, Bernd, 01561 Schönfeld (DE); EMGE, Andreas, 49448 Lemförde (DE); KNORR, Gottfried, 01987 Schwarzheide (DE); MALOTKI, Peter, 49448 Lemförde (DE); SEIFERT, Holger, 49163 Bohmte (DE)
(86) Internationale Anmeldenummer: PCT/EP2003/011014
(87) Internationale Veröffentlichungsnummer: WO 2004/035650

(56) Entgegenhaltungen:
- EP-A- 0 316 788
- EP-A- 0 587 317
- WO-A-99/60045
- US-B1- 6 423 755

## Beschreibung

Gegenstand der Erfindung ist ein Verfahren zur Herstellung von Polyurethan-Hartschaumstoffen durch Umsetzung von Polyisocyanaten mit Verbindungen mit mindestens zwei mit Isocyanatgruppen reaktiven Wasserstoffatomen.

Polyurethan-Hartschaumstoffe sind seit langem bekannt und werden vorwiegend zur Wärme- und Kälteisolation, z.B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung Polyurethan-Hartschaumstoffen findet sich.beispielsweise im Kunststoff-Handbuch, Band 7, Polyurethane 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Bei der technischen Herstellung von Polyurethan-Hartschaumstoffen, insbesondere von Sandwich-Elementen, oder der Herstellung von Kühlgeräten, ist die Aushärtung der Schaumstoffe von besonderer Bedeutung.

Durch schnellere Entformzeiten wird die Kapazität der bestehenden Produktionslinien erhöht, ohne dass weitere Investitionen in Maschinentechnik erforderlich sind. Bei der Herstellung von Sandwich-Elementen erlaubt die schnellere Aushärtung eine schnellere Doppelbandgeschwindigkeit und damit einen höheren Output pro Zeiteinheit.

Im Stand der Technik sind eine Reihe von Möglichkeiten bekannt, die Entformzeiten zu senken.

So beschreibt DE19630787 Polyurethane mit einer verbesserten Aushärtung durch den Einsatz aminhaltiger Polyole.

CA 2135352 beschreibt Polyurethane mit gutem Entformungsverhalten durch Einsatz eines mit Saccharose gestarteten Polyols.

Gemäß JP 07082335 wird die Entformung durch den Einsatz eines Gemisches aus 1,3,5-Tris(3-aminopropyl)hexahydro-s-Triazin, Pentamethyldiethylentriamin, Bis(2-dimethylaminoethyl)ether als Katalysatoren verbessert.

Gemäß JP 2001158815 erreicht man eine gute Entformung durch den Einsatz eines Gemisches aus aromatischen Polyesteralkoholen mit einer Hydroxylzahl im Bereich zwischen 405-500 mgKOH/g und einer Funktionalität von 2 bis 3 und Polyetheralkoholen auf Basis von TDA und Propylenoxid und/oder Butylenoxid mit einer Hydroxylzahl zwischen 300-450 mgKOH/g und einer Funktionalität von 3 bis 4.

Gemäß JP 10101762 wird eine gute Entformung durch ein Saccharose-Alkylenoxid-Polyol mit einer Molmasse über 300 und einer Funktionalität über 3 erreicht.

Gemäß JP 02180916 erzielt man eine gute Entformung durch ein aromatisches Polyesterol mit einer Funktionalität zwischen 2,2 und 3,6, und einer Hydroxylzahl zwischen 200 und 550 mgKOH/g, hergestellt durch Veresterung einer aromatischen Polycarbonsäure mit Diethylenglykol und einem trifunktionellem Alkohol.

Typischerweise wird also sowohl für Schaumstoffe zur Anwendung in Kühlgeräten als auch für Sandwichelemente entweder mit einer modifizierten Katalyse und/oder mit hochfunktionellen oder eigenreaktiven Amin-gestarteten Polyolen mit hoher Hydroxylzahl gearbeitet, um eine hohe Vernetzung und damit eine schnellere Aushärtung zu erzielen.

Durch die erhöhte Vernetzung verschlechtert sich häufig die Fließfähigkeit der Reaktionsgemischs, so dass eine höhere Menge an Material erforderlich ist, um einen Hohlraum (z.B. ein Formwerkzeug oder ein Kühlschrankgehäuse zu füllen.

Aufgabe der Erfindung war es, Polyurethan-Hartschaumstoffe bereitzustellen, die sich durch gute Aushärtung und Entformbarkeit bei einem optimalen Fließverhalten sowie gute mechanische Eigenschaften, insbesondere gute Druckfestigkeit, auszeichnen.

Die Aufgabe konnte überraschenderweise dadurch gelöst werden, dass die Polyolkomponente zu einem Teil oder vollständig aus Graft-Polyolen besteht.

Gegenstand der Erfindung ist somit ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Gegenwart von
c) Katalysatoren
d) Treibmitteln,
b) Verbindungen mit mindestens zwei mit Isocyanatgruppen reaktiven Wasserstoffatomen in Gegenwart von
c) Katalysatoren
d) Treibmitteln,
dadurch gekennzeichnet, dass die Verbindungen mit mindestens zwei mit Isocyanatgruppen reaktiven Wasserstoffatomen mindestens ein Graftpolyol, herstellbar durch in situ Polymerisation von ethylenisch ungesättigten Monomeren in Polyetheralkoholen, enthalten. Ein weiterer Gegenstand der Erfindung sind nach dem erfindungsgemäßen Verfahren herstellbare Polyurethan-Hartschaumstoffe.

Die nach dem erfindungsgemäßen Verfahren hergestellten Polyurethan-Hartschaumstoffe sind üblicherweise geschlossenzellig, das heißt, der Anteil an geschlossenen Zellen im Schaumstoff ist mindestens 88 %, vorzugsweise mindestens 95 %.

Die erfindungsgemäß eingesetzten Graftpolyole können in einer Menge bis zu 100 Gew.-% eingesetzt werden. Vorzugsweise erfolgt der Einsatz in einer Menge von 0,5 bis 70 Gew.-%, jeweils bezogen auf die Komponente b).

Bei der Herstellung von Kühlgeräten erfolgt der Einsatz der Graft-Polyole vorzugsweise in einer Menge von 3 Gew.-% bis 70 Gew.-%, besonders bevorzugt von 3 Gew.-% bis 50 Gew.-%, insbesondere in einer Menge von 3 Gew.-% bis 35 Gew.-%, jeweils bezogen auf das Gewicht der Komponente b).

Bei der Herstellung von Sandwich-Elementen werden die Graft-Polyole vorzugsweise in einer Menge von 0,5 bis 35 Gew.-%, vorzugsweise auf 0,5 bis 25 Gew.-% und insbesondere 1 bis 20 Gew.-%, jeweils bezogen auf das Gewicht der Komponente b), eingesetzt.

Die Graft-Polyole enthaltenden Polyolmischungen sind meist wenig lagerstabil. Um die Systeme verarbeitbar zu machen, erfolgt bei der Herstellung von Kühlgeräten vorzugsweise ein permanentes Rühren während Maschinenverschäumung.

Bei der Herstellung von Sandwich-Elementen sollte vorzugsweise eine Zusatzkomponente aus einem geeigneten Polyol, wie Polypropylenglykolen mit einem Molekulargewicht im Bereich zwischen 300 und 1500 g/mol, und dem Graftpolyol formuliert werden, die dann wochen- bis monatelang phasenstabil ist. Diese wird dann im Mischkopf zu den übrigen Komponenten zudosiert. Die Lagerstabilität der Polyolmischungen kann durch die Anwesenheit Die erfindungsgemäß eingesetzten Graftpolyole, häufig auch als Polymer-Polyole bezeichnet, sind Dispersionen von Polymeren, zumeist Acrylnitril-Styren-Copolymeren, in einem Polyetheralkohol.

Graftpolyole können durch radikalische Polymerisation der Monomere, vorzugsweise Acrylnitril, Styrol sowie gegebenenfalls weiterer Monomerer, eines Makromers, eines Moderators unter Einsatz eines Radikal-Initiators, meist Azo- oder Peroxidverbindungen, in einem Polyetherol beziehungsweise Polyesterol, häufig als Trägerpolyol bezeichnet, als kontinuierlicher Phase hergestellt werden.

Graftpolyole werden durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, analog den Angaben der deutschen Patentschriften 1111394, 1222669 (US 3304273, 3383351, 3523093), 1152536 (GB 1040452) und 1152537 (GB 987618), hergestellt.

Als Trägerpolyole kommen Verbindungen mit mindestens einer Funktionalität von 2 bis 8, vorzugsweise 2 bis 6, und einem mittleren Molekulargewicht von 300 bis 8000, vorzugsweise von 300 bis 5000 g/mol, zur Anwendung. Die Hydroxylzahl der Polyhydroxylverbindungen beträgt dabei in aller Regel 20 bis 160 und vorzugsweise 28 bis 56.

Makromere, auch als Stabilisatoren bezeichnet, sind lineare oder verzweigte Polyetherole mit Molekulargewichten ≥ 1000 g/mol, die mindestens eine endständige, reaktionsfähige olefinische ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-Derivaten sowie Isocyanat-Derivaten,wie 3-Isopropenyl-1,1-dimethylbenzyl-isocyanate, Isocyanato-ethylmethacrylate, an ein bereits bestehendes Polyol eingefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Patenten US 4 390 645, US 5 364 906, EP 0 461 800, US 4997857, US 5358984, US 5990232, WO 01/04178 und US 6013731 beschrieben.

Während der radikalischen Polymerisation werden die Makromere mit in die Copolymerkette eingebaut. Dadurch bilden sich Blockcopolymere mit einem Polyether- und einen Poly-acrylnitril-styren-Block, welche in der Grenzfläche von kontinuierlicher Phase und dispergierter Phase als Phasenvermittler wirken und das Agglomerieren der Graftpolyolpartikel unterdrücken. Der Anteil der Makromere beträgt üblicherweise 1 bis 15 Gew.-%, bezogen auf das Gesamtgewicht der zur Herstellung des Graftpolyols eingesetzten Monomere.

Zur Herstellung von Graftpolyolen werden üblicherweise Moderatoren, auch als Kettenüberträger bezeichnet, eingesetzt. Der Einsatz und die Funktion dieser Moderatoren wird beispielsweise in US 4 689 354, EP 0 365 986, EP 0 510 533 und EP 0 640 633, EP 008 444, EP 0731 118 B1 beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graftpolyole beeinflusst. Der Anteil der Moderatoren beträgt üblicherweise 0,5 bis 25 Gew.-%, bezogen auf das Gesamtgewicht der zur Herstellung des Graftpolyols eingesetzten Monomere. Moderatoren, die üblicherweise zur Herstellung von Graftpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren.

Zur Initiierung der radikalischen Polymersisation werden üblicherweise Peroxid- oder Azo-Verbindungen, wie Dibenzoyl peroxide, Lauroyl peroxide, t-Amylperoxy-2-ethylhexanoate, Di-t-butyl peroxide, Diisopropyl peroxide carbonate, t-Butyl-peroxy-2-ethylhexanoate, t-Butylperpivalate, t-Butylperneodecanoate, t-Butylperbenzoate, t-Butyl percrotonate, t-Butyl perisobutyrate, t-Butylperoxy-1-methylpropanoate, t-Butyl-peroxy-2-ethylpentanoate, t-Butylperoxyoctanoate und di-t-butylperphthalate, 2,2'-Azobis(2,4-dimethyl-valereronitrile), 2,2'-Azobisisobutyronitrile (AIBN), Dimethyl-2,2'-azobisiso-butyrate, 2,2'-Azobis(2-methylbutyronitrile (AMBN), 1,1'-Azo-bis(1-cyclohexanecarbonitrile) eingesetzt. Der Anteil der Initiatoren beträgt üblicherweise 0,1 bis 6 Gew.-%, bezogen auf das Gesamtgewicht der zur Herstellung des Graftpolyols eingesetzten Monomere.

Die radikalische Polymerisation zur Herstellung von Graftpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Graftpolyolen sind Temperaturen von 80 bis 140°C, bei einem Druck von Atmosphärendruck bis 15 bar.

Die für das erfindungsgemäße Verfahren eingesetzten Graftpolyole können in einer Ausführungsform des erfindungsgemäßen Verfahrens unter Verwendung von Trägerpolyolen hergestellt werden, die in ihren Eigenschaften üblichen und bekannten Weichschaum-Polyetheralkoholen entsprechen. Derartige Polyetheralkohole haben zumeist eine Funktionalität von 2 bis 8 und eine Hydroxylzahl im Bereich zwischen 20 und 100 mgKOH/g. Ihre Herstellung erfolgt durch Anlagerung von Propylenoxid oder Gemischen aus Ethylenoxid und Propylenoxid an H-funktionelle Startsubstanzen, beispielsweise Glycerin, Trimethylolpropan oder Glykole wie Ethylenglykol oder Propylenglykol. Als Katalysatoren für die Anlagerung der Alkylenoxide können Basen, vorzugsweise Hydroxide von Alkalimetallen, oder Multimetallcyanidkomplexe, sogenannte DMC-Katalysatoren, eingesetzt werden. Derartige Graftpolyole haben zumeist eine Hydroxylzahl im Bereich zwischen 10 und 70 mgKOH/g bei einem Feststoffgehalt von 35 bis 60 %.

In einer besonderen Ausführungsform des erfindungsgemäßen Verfahrens werden als Trägerpolyole solche Polyetheralkohole eingesetzt, wie sie üblicherweise zur Herstellung von Polyurethan-Hartschaumstoffen verwendet werden. Derartige Polyetheralkohole haben zumeist eine Funktionalität von 2 bis 8 und eine Hydroxylzahl im Bereich zwischen 100 und 800 mgKOH/g. Als Startsubstanzen werden mehrfunktionelle Alkohole, wie Glycerin, Trimethylolpropan oder Zuckeralkohole, wie Sorbit, Saccharose oder Glucose, aliphatische Amine, wie Ethylendiamin, oder aromatische Amine, wie Toluylendiamin (TDA), Diphenylmethandiamin (MDA) oder Gemische aus MDA und Polyphenylen-Polymethylen-Polyaminen eingesetzt. Als Alkylenoxide werden Propylenoxid oder Gemische aus Ethylenoxid und Propylenoxid eingesetzt. Derartige Graftpolyole haben zumeist eine Hydroxylzahl im Bereich zwischen 60 und 150 mgKOH/g bei einem Feststoffgehalt von 35 bis 60 %.

Durch den Einsatz derartiger Graftpolyole lassen sich höhere Vernetzungsdichten des Polyurethannetzwerkes erzielen als mit den bekannten Graftpolyolen auf Basis von Weichschaum-Trägerpolyolen.

Die erfindungsgemäß eingesetzten Graftpolyole haben vorzugsweise eine Teilchengröße der Polymere von 0,1 µm bis 8 µm, vorzugsweise 0,2 µm bis 4 µm mit einem Maximum bei der Teilchengröße bei 0,2 bis 3 µm vorzugsweise bei 0,2 bis 2,0 µm. Der Feststoffgehalt der Graftpolyole liegt zumeist in einem Bereich von 10 bis 60 Gew.-%, bezogen auf das Polyol.

Vorzugsweise eingesetzte derartige Graftpolyole haben als Trägerpolyole Polyetheralkohole mit einer Hydroxylzahl zwischen 130 und 240 mgKOH/g, deren Startsubstanz vicinales TDA ist, an welches Propylenoxid oder ein Gemisch aus 5 bis 12 Gew.-% Ethylenoxid und 88 bis 95 Gew.-% Propylenoxid angelagert wird. Die so erhaltenen Graft-Polyole haben vorzugsweise eine Hydroxylzahl zwischen 70 und 100 mgKOH/g, einen Feststoffgehalt zwischen 40 und 55 Gew-.%, bezogen auf das gesamte Graftpolyol. Als Monomere wird vorzugsweise ein Gemisch aus Acrylnitril und Styrol im Gewichtsverhältnis von 1:3 bis 3:1, vorzugsweise 1:2 eingesetzt.

In einer weiteren Ausführungsform derartiger Graftpolyole werden als Trägerpolyole Polyetheralkohole mit einer Hydroxylzahl im Bereich zwischen 140 und 240 mgKOH/g eingesetzt, die durch Anlagerung von Alkylenoxiden, insbesondere Propylenoxid oder Gemischen aus Propylenoxid und Ethylenoxid an übliche zwei- oder dreifunktionelle Startsubstanzen, wie Glykole, Glyzerin und/oder Trimethylolpropan hergestellt werden. Derartige Graft-Polyole haben vorzugsweise eine Hydroxylzahl im Bereich zwischen 70 und 110 mgKOH/g und einen Feststoffgehalt zwischen 30 und 70 Gew.-%, bezogen auf das Gewicht des gesamten Graftpolyols.

In einer weiteren bevorzugten Ausführungsform der erfindungsgemäß eingesetzten Graftpolyole ist die Teilchengrößenverteilung bimodal, das heißt, die Verteilungskurve der Teilchengröße weist zwei Maxima auf. Derartige Graftpolyole können beispielsweise hergestellt werden, durch Mischen von Graftpolyolen mit monomodaler Teilchengrößenverteilung und unterschiedlicher Teilchengröße im entsprechenden Verhältnis aber auch indem man als Trägerpolyol in der Reaktionsvorlage ein Polyol verwendet, das bereits Polymerisate aus olefinisch ungesättigten Monomeren enthält. Die Teilchengröße liegt auch bei dieser Ausführungsform im oben beschriebenen Bereich.

Die erfindungsgemäß eingesetzten Graftpolyole können in kontinuierlichen Verfahren und diskontinuierlichen Verfahren hergestellt werden. Die Synthese von Graftpolyolen nach beiden Verfahren ist bekannt und wird in einer Reihe von Beispielen beschrieben. So wird die Synthese von Graftpolyolen nach den Semi Batch Verfahren in den folgenden Patenten beschrieben: EP 439755, US 4522976, EP 163188, US 5830944, EP 894812, US 4394491 A, WO 87/03886, WO 97/44368, US 5554662. Eine Sonderform des Semi Batch Verfahrens ist das Semi Batch Saatverfahren, bei dem in der Reaktionsvorlage zusätzlich ein Graftpolyol als Saat eingesetzt wird, beispielsweise beschrieben in EP 510533, EP 786480 sowie in EP 698628. Die Synthese von Graftpolyolen nach einen kontinuierlichen Verfahren ist ebenfalls bekannt und wird unter anderem in WO 00/59971, WO 99/31160, US 5955534, US 5496894, US 5364906, US 5268418, US 6143803, EP 0768324 beschrieben.

Zu den übrigen für das erfindungsgemäße Verfahren eingesetzten Einsatzstoffen ist im einzelnen folgendes zu sagen:

Als organische Polyisocyanate a) kommen vorzugsweise aromatische mehrwertige Isocyanate in Betracht.

Im einzelnen seien beispielhaft genannt: 2,4- und 2,6-Toluylendiisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethandiisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylendiisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Als Verbindungen mit mindestens zwei gegenüber Isocyanat reaktiven Wasserstoffatomen b), die gemeinsam mit den erfindungsgemäß eingesetzten Graftpolyolen verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den erfindungsgemäß eingesetzten Graftpolyolen eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Graftpolyolen verwendeten Polyetheralkohole haben zumeist eine Funktionalität zwischen 2 und 8, insbesondere 3 bis 8.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylen-oxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diamino-diphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Durch den Einsatz von difunktionellen Polyolen, beispielsweise Polyethylenglykole und/oder Polypropylenglykole - mit einem Molgewicht im Bereich zwischen 500 bis 1500 - in der Polyolkomponente kann die Viskosität der Polyolkomponente angepasst werden.

Zu den Verbindungen mit mindestens zwei gegenüber Isocyanat reaktiven Wasserstoffatomen b) gehören auch die gegebenenfalls mitverwendeten Kettenverlängerer und Vernetzer. Die PUR-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri-und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Als Katalysatoren c) werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z.B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel d) kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Bevorzugt eingesetzt werden Kohlenwasserstoffe ohne Halogenatome, insbesondere Pentane, gegebenenfalls im Gemisch mit Propan und Butanen. Die genannten physikalischen Treibmittel können allein oder in beliebigen Kombinationen untereinander eingesetzt werden.

Das erfindungsgemäße Verfahren kann, falls erforderlich, in Anwesenheit von Flammschutzmitteln sowie üblichen Hilfsmitteln und/oder Zusatzstoffen Hilfs- und/oder Zusatzstoffen durchgeführt werden.

Als Flammenschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlor-propyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, dass der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem höheren Index, vorzugsweise bis 350, gearbeitet werden.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b), mit den Flammschutzmitteln, den Katalysatoren c), den Treibmitteln d), sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen in geschlossene Stützwerkzeuge gegossen werden. Nach dieser Technologie werden z.B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren.

Auch die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die eingesetzten Komponenten in bis zu 8 Einzelkomponenten aufgeteilt werden. Die Verschäumrezepturen lassen sich, abgeleitet von dem Zweikomponentenverfahren in einfacher Weise auf die Verarbeitung von Mehrkomponentensystemen umrechnen.

Die nach dem erfindungsgemäßen Verfahren hergestellten Polyurethan-Hartschaumstoffe zeichnen sich, wie oben dargestellt, durch optimale Verarbeitungseigenschaften, insbesondere eine gute Aushärtung, aus. Überraschenderweise zeigen die nach dem erfindungsgemäßen Verfahren hergestellten Polyurethan-Hartschaumstoffe eine verringerte Neigung zur Bildung von Lunkern.

Durch die im Vergleich zu üblichen Hartschaum-Polyetheralkoholen geringere Hydroxylzahl der eingesetzten Graftpolyole kann die Menge an Isocyanat für die Herstellung der Schaumstoffe verringert werden.

Die Erfindung soll an nachstehenden Beispielen näher erläutert werden.

### Messmethoden

1) Die Härtung wurde mit dem Bolzentest ermittelt. Dazu wird 2, 3 und 4 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Angegeben ist jeweils die Summe der gemessenen Maximalkräfte nach 2, 3 und 4 Minuten.
2) Die Fließfähigkeit wurde mit dem Schlauchtest ermittelt. Dazu werden 100 g des durch Vermischen der Komponenten erhaltenen Reaktionsgemischs in einen Kunststoffschlauch mit 45 mm Durchmesser gegossen und der Schlauch verschlossen. Die Länge des Fließwegs im Kunststoffschlauch in cm ist ein Maß für die Fließfähigkeit.
3) Die Wärmeleitfähigkeit wurde bestimmt nach DIN 52 616-77. Zur Herstellung der Prüfkörper wurde das Polyurethan-Reaktionsgemisch in eine Form der Maße 22,5 X 22,5 X 22 cm gegossen (10 % Überfüllung) und nach einigen Stunden ein Prüfkörper der Dimension 20X20X5 cm aus der Mitte geschnitten.
4) Die Druckfestigkeit wurde bestimmt nach nach DIN 52 421/DIN EN ISO 604.
5) Visuelle Beurteilung der Schaumstruktur/Feinzelligkeit des Schaums. 1: sehr feinzellig; 2: feinzellig; 3: leicht grobzellig; 4: grobzellig. Der Anteil an geschlossenen Zellen wurde bestimmt nach ISO 4590.
6) Visuelle Beurteilung der Tendenz zur Bildung von Bodenstörungen bzw. Lunkern der Sandwichelemente. 1: sehr glatte Oberfläche, keinerlei Bodenstörungen/Lunker an der Unterseite des Sandwichelements; 2: sehr vereinzelt schwache Bodenstörungen/Lunker an der Unterseite des Sandwichelements; 3: einige Bodenstörungen/Lunker an der Unterseite des Sandwichelements; 4: ganzflächig massive Bodenstörungen an der Unterseite des Sandwichelements
7) Beurteilung der Aushärtung der Sandwichelemente am Bandende:
   1: minimale Änderung der Elementdicke nach 24 Stunden;
   2: leichte Änderung der Elementdicke nach 24 Stunden;
   3: deutliche Änderung der Elementdicke nach 24 Stunden
8) Das Brandverhalten wurde bestimmt im Kleinbrennertest nach DIN 4102

### Herstellung der Graftpolyole

### Graftpolyole, hergestellt im Semi Batch Verfahren

Die Herstellung der Graftpolyole nach dem Semi Batch Verfahren erfolgte in einem 2 Liter Autoklav ausgestattet mit 2-stufigen Rührwerk, innenliegenden Kühlschlangen und elektrischen Heizmantel. Vor Beginn der Reaktion wurde der Reaktor mit einem Gemisch aus Carrierpolyol und Macromer befüllt; mit Stickstoff gespült und auf Synthesetemperatur von 125 bzw. 130°C erwärmt. Bei einigen Synthesen wurde der Reaktionsvorlage neben dem Carrierpolyol und dem Macromer zusätzlich ein Graftpolyol (Polyol 28) als Saat zugesetzt.

Der restliche Teil der Reaktionsmischung, bestehend aus weiteren Carrierpolyol, Initiator, den Monomeren und dem Reaktionsmoderator wurde in mindestens zwei Dosierbehältern vorgelegt. Die Synthese der Graftpolyole erfolgte durch Überführen der Rohstoffe aus den Dosierbehältern mit konstanter Dosiergeschwindigkeit über einen statischen In-Line Mischer in den Reaktor. Die Dosierdauer für das Monomer-Moderator-Gemisch betrug 150 oder 180 Minute, während das Polyol-Initiator-Gemisch über 165 oder 195 Minuten in den Reaktor dosiert wurde. Nach weiteren 10 bis 30 Minuten Nachreaktionszeit bei Reaktionstemperatur wurde das Rohgraftpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidanzien stabilisiert.

**Tabelle 0: Graftpolyole, hergestellt im Semi Batch Verfahren**

| | **Polyol 20** | **Polyol 21** | **Polyol 23** | **Polyol 24** | **Polyol 27** | **Polyol 28** |
|---|---|---|---|---|---|---|
| **Reaktionsbedingungen** | | | | | | |
| Temperatur (°C) | 125 | 120 | 130 | 125 | 125 | 125 |
| Startdruck (bar) | 0 | 0 | 0 | 3 | 3 | 1 |
| **Reaktorvorlage** | | | | | | |
| Carrierpolyol (g) | Polyol 13 214,17 | Polyol 14 275,2 | Polyol 13 336,70 | Polyol 12 356,07 | Polyol 15 356,07 | Polyol 15 336,58 |
| Macromer (g) | Polyol 16 27,36 | Polyol 16 22,8 | Polyol 16 18,24 | Polyol 16 23,38 | Polyol 16 23,38 | Polyol 16 18,14 |
| saat (g) | - | - | Polyol 28 60,00 | Polyol 28 122,10 | Polyol 28 122,10 | - |
| **Dosierstrom 1** | | | | | | |
| Acrylnitril (g) | 239,98 | 199,98 | 159,98 | 205,02 | 205,02 | 159,98 |
| Styren (g) | 480,02 | 400,02 | 320,02 | 410,10 | 410,10 | 320,02 |
| N-Dodecanthiol (g) | 7,27 | 6,06 | 4,85 | 6,46 | 6,46 | 5,23 |
| Dosierdauer (min) | 180 | 180 | 150 | 150 | 150 | 150 |
| **Dosierstrom 2** | | | | | | |
| Carrierpolyol (g) | Polyol 13 227,60 | Polyol 14 292,23 | Polyol 13 357,81 | Polyol 12 378,4 | Polyol 15 378,4 | Polyol 15 357,68 |
| Initiator (g) | Initiator 1 3,60 | Initiator 2 3,48 | Initiator 1 2,40 | Initiator 1 2,86 | Initiator 1 2,86 | Initiator 3 2,36 |
| Dosierdauer (min) | 195 | 195 | 165 | 165 | 165 | 165 |

Polyol 22, hergestellt im kontinuierlichen Verfahren

Zur Herstellung von Graftpolyolen nach dem kontinuierlichen Verfahren unter Druck wurde ein 300 ml Rührreaktor mit kontinuierlichen Zu- und Abfluss eingesetzt. Der Reaktor wurde vor dem Reaktionsstart vollständig mit Polyol 12 oder Graftpolyol aus der vorhergehenden Synthese gefüllt und auf Synthesetemperatur von 133°C erwärmt. Die Reaktionsmischung wurde in zwei Dosierbehältern bereitgestellt und mit den angegebenen Dosiergeschwindigkeiten in den Reaktor gepumpt.

| | | | |
|---|---|---|---|
| Dosierstrom 1 | | Dosiergeschwindigkeit: | 14,54 g/min |
| Acrylnitril | 449,96 g | | |
| Styren | 900,05 g | | |
| Isopropanol | 202,50 g | | |

| | | | |
|---|---|---|---|
| Dosierstrom 2 | | Dosiergeschwindigkeit: | 15,46 g/min |
| Polyol 12 | 1578,45 g | | |
| Polyol 16 | 60,75 g | | |
| Initiator 2 | 10,80 g | | |

Vor Eintritt in den Reaktor wurden beide Dosierströme über einen statischen In-line Mischer vereinigt. In der Startphase wurde das erhaltene Produkt verworfen. Der kontinuierliche Zustand wird üblicherweise nach 10 turn over, entspricht ca. 3000 ml erreicht.

Die Reaktionsmischung wurde über eine Öffnung am Boden in den Reaktor gepumpt, im Reaktor intensiv mit dem bereits darin enthaltenen Material durch Rühren (1500 U/min) vermischt und verließ den Reaktor über ein regelbares, federbelastetes Rückhalteventil am Reaktorkopf. Der Druck im Reaktor wurde bei 4 bis 10 bar gehalten, wobei die Reaktionstemperatur 140 bis 145°C betrug. Nach dem Verlassen des Reaktors wurde das jetzt drucklose Rohgraftpolyol in einem Glaskolben aufgefangen. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidanzien stabilisiert.

### Beispiele 1 bis 8 und Vergleichsbeispiele 1 bis 4

### Vergleichsbeispiel 1 (Hartschaum zum Einsatz in Kühlgeräten; Handverschäumung)

Aus 54,4 Gewichtsteilen eines Polyetheralkohols auf Basis von Sorbit und Propylenoxid mit einer Hydroxylzahl von 490 mgKOH/g (Polyol 1), 25,0 Gewichtsteilen eines Polyetheralkohol auf Basis von Saccharose, Glycerin und Propylenoxid, Hydroxylzahl: 490 mgKOH/g (Polyol 2), 0,8 Gewichtsteilen Glycerol, 1,7 Gewichtsteilen Silikonstabilisator L 6900 der Firma Crompton, 1,3 Gewichtsteilen Wasser, 0,7 Gewichtsteilen N,N-Dimethylcyclohexyamin, 1,1 Gewichtsteilen Lupragen® N301, BASF Aktiengesellschaft und 0,6 Gewichtsteilen Lupragen® N600, BASF Aktiengesellschaft und 14 Gewichtsteilen Cyclopentan wurde durch Vermischen eine Polyolkomponente hergestellt.

100 Gewichtsteile der Polyolkomponente wurden mit 150 Gewichtsteilen einer Mischung aus Diphenylmethandiisocyanat und Polyphenylen-polymethylen-polyisocyanat mit einem NCO-Gehalt von 31,5 Gew.-% und einer Viskosität von 200 mPas (25°C) vermischt. Dies entspricht einer Kennzahl von 132. Die Mischung wurde mit einem Vollrath-Rührer vermischt bei einer maximalen Drehzahl von 1500 min⁻¹ und dann frei aushärten lassen.

Der erhaltene Schaum hatte eine Rohdichte von 30 g/l, eine Wärmeleitfähigkeit von 20,5 mW/mK und eine Aushärtung, bestimmt aus dem Mittelwert der Messungen für die Eindruckhärte nach 2, 3 und 4 Minuten von 135 N. Der Anteil an offenen Zellen war 10 %.

### Beispiel 1

### (Hartschaum zum Einsatz in Kühlgeräten)

Es wurde verfahren wie in Vergleichsbeispiel 1, jedoch wurden das Polyol 2 um 25 Gewichtsteile reduziert und dafür 25 Gew.-Teile eines Graftpolyols verwendet mit einer Hydroxylzahl von 60,2 mgKOH/g, einem Feststoffgehalt von 60 Gew.-% und einer Viskosität bei 25°C von 30000 mPa·s, hergestellt durch in situ Polymerisation Acrylnitril und Styrol in einem Masseverhältnis von 1:2 in einem Trägerpolyol auf Basis von Trimethylolpropan und Propylenoxid mit einer Hydroxylzahl von 160 mgKOH/g (Polyol 20).

100 Gewichtsteile der Polyolkomponente wurden mit 113 Gewichtsteilen einer Mischung aus Diphenylmethandiisocyanat und Polyphenylen-polymethylen-polyisocyanat mit einem NCO-Gehalt von 31,5 Gew.-% und einer Viskosität von 200 mPas (25°C) vermischt. Dies entspricht einer Kennzahl von 132. Die Mischung wurde mit einem Vollrath-Rührer vermischt bei einer maximalen Drehzahl von 1500 min ⁻¹ und dann frei aushärten lassen.

Der erhaltene Schaum hatte eine Rohdichte von 30 g/l, eine Wärmeleitfähigkeit von 19,2 mW/mK und eine Aushärtung, bestimmt aus dem Mittelwert der Messungen für die Eindruckhärte nach 2, 3 und 4 Minuten von 177 N. Der Anteil an offenen Zellen war 9 %.

Die Beispiele 2 bis 6 und Vergleichsbeispiel 2 wurden nach dem gleichen Verfahren durchgeführt. Die eingesetzten Rohstoffe sowie die ermittelten Schaumeigenschaften sind in Tabelle 1 dargestellt.

### Vergleichsbeispiel 2

### (Hartschaum zum Einsatz in Kühlgeräten; Maschinenverschäumung)

Aus 20 Gewichtsteilen Polyol 1, 35,6 Gewichtsteilen eines Polyetheralkohols auf Basis von Saccharose, Pentaerythrit, Diethylenglykol und Propylenoxid mit einer Hydroxylzahl von 400 mgKOH/g (Polyol 3), 30 Gewichtsteilen eines Polyetheralkohols aus vicinalem Toluylendiamin, Ethylenoxid und Propylenoxid mit einer Hydroxylzahl von 400 mgKOH/g (Polyol 4), 7 Gewichtsteilen Rizinusöl, 3 Gewichtsteilen Silikonstabilisator Tegostab B 8467 der Firma Degussa, 2,3 Gewichtsteilen Wasser, 0,7 Gewichtsteilen Dimethylcyclohexyamin, 0,7 Gewichtsteilen Lupragen® N301, BASF Aktiengesellschaft, 0,7 Gewichtsteilen Dabco® T der Firma Air Products und 14 Gewichtsteilen Cyclopentan wurde durch Vermischen eine Polyolkomponente hergestellt.

100 Gewichtsteile der Polyolkomponente wurden mit 134 Gewichtsteilen einer Mischung aus Diphenylmethandiisocyanat und Polyphenylen-polymethylen-polyisocyanat mit einem NCO-Gehalt von 31,5 Gew.-% und einer Viskosität von 200 mPas (25°C) in einer Hochdruck-Verschäummaschine vom Typ Puromat HD 30 (Elastogran GmbH) vermischt. Dies entspricht einer Kennzahl von 122. Die Reaktionsmischung wurde in ein Formwerkzeug der Abmessungen 200 cm X 20 cm X 5 cm (Boschlanze) bzw. 40 cm X 70 cm X 9 cm eingespritzt und dort aufschäumen lassen.

Die Eigenschaften des Schaumstoffs sind in Tabelle 2 zusammengefasst.

### Beispiel 4

### (Hartschaum zum Einsatz in Kühlgeräten)

Es wurde verfahren wie in Vergleichsbeispiel 2, jedoch wurden das Polyol 3 um 25 Gewichtsteile reduziert und dafür 25 Gew.-Teile eines Graftpolyols mit einer Hydroxylzahl von 20 mgKOH/g, einem Feststoffgehalt von 45 Gew.-% und einer Viskosität bei 25°C von 8000 mPa·s, hergestellt durch in situ Polymerisation Acrylnitril und Styrol in einem Masseverhältnis von 1:2 in einem Trägerpolyol auf Basis von Glycerin, Propylenoxid und Ethylenoxid mit einer Hydroxylzahl von 35 mgKOH/g eingesetzt. (Polyol 22).

100 Gewichtsteile der Polyolkomponente wurden mit 114 Gewichtsteilen einer Mischung aus Diphenylmethandiisocyanat und Polyphenylen-polymethylen-polyisocyanat mit einem NCO-Gehalt von 31,5 Gew.-% und einer Viskosität von 200 mPas (25°C) vermischt. Dies entspricht einer Kennzahl von 125. Die Reaktionsmischung wurde in ein Formwerkzeug der Abmessungen 200 cm X 20 cm X 5 cm bzw. 40 cm X 70 cm X 9 cm eingespritzt und dort aufschäumen lassen.

Die Beispiele 7 und 8 sowie die Vergleichsbeispiele 3 und 4 wurden nach dem gleichen Verfahren durchgeführt. Die eingesetzten Rohstoffe sowie die ermittelten Schaumeigenschaften sind in Tabelle 2 dargestellt.

**Tabelle 1 - Herstellung der Schaumstoffe (Handverschäumung)**

| | Vergleichsbeispiel 1 | Beispiel 1 | Beispiel 2 | Beispiel 3 | Vergleichsbsp. 2 | Beispiel 4 | Beispiel 5 | Beispiel 6 |
|---|---|---|---|---|---|---|---|---|
| Polyol 1 | 54,4 | 54,4 | 54,4 | 54,4 | 20 | 20 | 20 | 20 |
| Polyol 2 | 25 | | 15 | | | | | |
| Polyol 3 | | | | | 35,6 | 10,6 | 25,6 | 10,6 |
| Polyol 4 | | | | | 30 | 30 | 30 | 30 |
| Glycerol | 0,8 | 0,8 | 0,8 | 0,8 | | | | |
| Polyol 20 | | 25 | 10 | | | | | |
| Polyol 21 | | | | 25 | | | | 25 |
| Polyol 22 | | | | | | 25 | 10 | |
| Ricinusöl | | | | | 7 | 7 | 7 | 7 |
| Stabilisator 1 | 1,7 | 1,7 | 1,7 | 1,7 | | | | |
| Stabilisator 2 | | | | | 3 | 3 | 3 | 3 |
| Wasser | 1,3 | 1,3 | 1,3 | 1,3 | 2,3 | 2,3 | 2,3 | 2,3 |
| Katalysator 1 | 0,7 | 0,7 | 0,7 | 9,7 | 0,7 | 0,7 | 0,7 | 0,7 |
| Katalysator 2 | 1,1 | 1,1 | i>i | 1,1 | 0,7 | 0,7 | 0,7 | 0,7 |
| Katalysator 3 | 0,6 | 0,6 | 0,6 | 0,6 | | | | |
| Katalysator 4 | | | | | 0,7 | 0,7 | 0,7 | 0,7 |
| Cyclopentan | 14 | 14 | 14 | 14 | 14 | 14 | 14 | 14 |
| | | | | | | | | |
| Mischungsverhältnis 100: | 150 | 113 | 144 | 125 | 134 | 114 | 127 | 117 |
| Kennzahl | 132 | 132 | 132 | 132 | 125 | 125 | 125 | 125 |
| Startzeit [s] | 8 | 7 | 8 | 7 | 8 | 9 | 9 | 8 |
| Abbindezeit [s] | 50 | 49 | 52 | 48 | 53 | 58 | 57 | 56 |
| Rohdichte [g/l] | 30 | 30 | 29 | 30 | 28 | 28 | 27 | 28 |
| Offenzelligkeit [%] | 10 | 9 | 10 | 11 | 9 | 8 | 10 | 11 |
| Bolzentest [N/mm²] | 135 | 177 | 152 | 172 | 64 | 101 | 85 | 99 |
| Wärmeleitfähigkeit [mW/mK] | 20,5 | 19,2 | 19,9 | 19,4 | 19,1 | 20,3 | 19,8 | 20,1 |

**Tabelle 2 - Herstellung der Schaumstoffe (Maschinenverschäumung)**

| | Vergleichsbeispiel 2 | Beispiel 4 | Vergleichsbeispiel 3 | Beispiel 7 | Vergleichsbeispiel 4 | Beispiel 8 |
|---|---|---|---|---|---|---|
| Polyol 1 | 20 | 20 | 20 | 20 | 20 | 20 |
| Polyol 3 | 35,6 | 10,6 | 35,6 | 10,6 | 35,6 | 10,6 |
| Polyol 4 | 30 | 30 | 30 | 30 | 30 | 30 |
| Polyol 22 | | 25 | | 25 | | 25 |
| Ricinusöl | 7 | 7 | 7 | 7 | 7 | 7 |
| Stabilisator 2 | 3 | 3 | 3 | 3 | 3 | 3 |
| Wasser | 2,3 | 2,3 | 2,3 | 2,3 | 2,3 | 2,3 |
| Katalysator 1 | 0,7 | 0,7 | 0,7 | 0,7 | 0,7 | 0,7 |
| Katalysator 2 | 0,7 | 0,7 | 0,7 | 0,7 | 0,7 | 0,7 |
| Katalysator 4 | 0,7 | 0,7 | 0,7 | 0,7 | 0,7 | 0,7 |
| Cyclopentan | 14 | 14 | 9,8 | 9,8 | 12,7 | 12,7 |
| Isopentan | | | 4,2 | 4,2 | | |
| Isobutan | | | | | 1,3 | 1,3 |
| | | | | | | |
| Mischungsverhältnis 100: | 134 | 114 | 134 | 114 | 134 | 114 |
| Kennzahl | 132 | 132 | 132 | 132 | 132 | 132 |
| Abbindezeit [s] | 44 | 41 | 47 | 45 | 47 | 44 |
| Freigeschäumte Rohdichte [g/l] | 22,0 | 22,5 | 20,8 | 20,7 | 20,2 | 20,6 |
| Minimale Fülldichte [g/l] | 31,8 | 31,2 | 29,5 | 28,3 | 28,8 | 28,3 |
| Fließfaktor (min. Fülldichte / freie Rohdichte) | 1,45 | 1,39 | 1,41 | 1,37 | 1,42 | 1,39 |
| Offenzelligkeit [%] | 6 | 7 | 5 | 8 | 6 | 6 |
| Wärmeleitfähigkeit [mW/mK] | 19,3 | 19,2 | 19,4 | 19,2 | 19,2 | 19,1 |
| Druckfestigkeit (RD 35) [N/mm²] | 0,135 | 0,12 | 0,13 | 0,12 | 0,135 | 0,12 |
| Nachtrieb nach 24 h, 10 % Overpack [mm] | 91,3 | 90,5 | 91,1 | 90,6 | 91,1 | 90,4 |

### Beispiele 10 bis 27 und Vergleichsbeispiele 5 bis 7 (Herstellung von Sandwichelementen)

Aus den in den Tabellen 3, 4 und 5 aufgeführten Einsatzstoffen wurde eine Polyolkomponente hergestellt und im angegebenen Mischungsverhältnis auf einer Doppelbandanlage mit einer Mischung aus Diphenylmethandiisocyanat und Polyphenylen-polymethylen-polyisocyanat mit einem NCO-Gehalt von 31,0 Gew.-% und einer Viskosität von 520 mPas (25°C) zur Herstellung eines Sandwichelements mit einer Stärke von 80 mm bzw. 120 mm zur Reaktion gebracht. Die eingesetzten Rohstoffe sowie die Eigenschaften der Sandwichelemente sind in den Tabellen 3 bis 5 aufgeführt.

**Tabelle 3**

| | Vergleichsbeispiel 5 | Beispiel 10 | Beispiel 11 | Beispiel 12 | Beispiel 13 | Beispiel 14 | Beispiel 15 | Beispiel 16 |
|---|---|---|---|---|---|---|---|---|
| Polyol 2 | 20 | 20 | 20 | 20 | 20 | 20 | 20 | 20 |
| Polyol 5 | 18,5 | 18,5 | 18,5 | 18,5 | 18,5 | 18,5 | 18,5 | 18,5 |
| Polyol 6 | 16 | 16 | 16 | 16 | 16 | 16 | 16 | 16 |
| Polyol 7 | 20 | 20 | 20 | 20 | 20 | 20 | 20 | 20 |
| Polyol 8 | 10 | 10 | 10 | 10 | 10 | 10 | 10 | 10 |
| Glycerin | 2 | 2 | 2 | 2 | 2 | 2 | 2 | 2 |
| Dipropylenglykol | 0,2 | 0,2 | 0,2 | 0,2 | 0,2 | 0,2 | 0,2 | 0,2 |
| Polyol 21 | | 5 | | | | | | |
| Polyot 23 | | | 10 | 5 | | | | |
| Polyol 24 | | | | | 5 | | | |
| Polyol 25 | | | | | | 5 | 4,5 | |
| Polyol 26 | | | | | | | | 5 |
| Flammschutzmittel 1 | 12 | 12 | 12 | 12 | 12 | 12 | 12 | 12 |
| Stabilisator 3 | 1 | 1 | 1 | 1 | 1 | 1 | 1,5 | 1 |
| Katalysator 1 | 4,6 | 4,6 | 4,6 | 4,6 | 4,6 | 4,6 | 4,6 | 4,6 |
| Wasser | 2,53 | 2,53 | 2,53 | 2,53 | 2,53 | 2,53 | 2,53 | 2,53 |
| n-Pentan | 7,0 | 7,0 | 7,0 | 7,0 | 7,0 | 7,0 | 7,0 | 7,0 |
| | | | | | | | | |
| Mischungsverhältnis 100: | 119 | 119 | 119 | 119 | 119 | 119 | 119 | 119 |
| Startzeit [s] | 15 | 15 | 14 | 15 | 16 | 15 | 15 | 16 |
| Abbindezeit [s] | 45 | 45 | 44 | 45 | 46 | 44 | 45 | 47 |
| Rohdichte [g/l] | 42 | 41 | 42 | 43 | 42 | 44 | 42 | 43 |
| Elementdicke [mm] | 80 | 80 | 80 | 80 | 80 | 80 | 80 | 80 |
| Bolzentest [N] | 168 | 206 | 225 | 211 | 222 | 230 | 215 | 221 |
| Offenzelligkeit [%] | 8 | 10 | 10 | 8 | 11 | 10 | 9 | 9 |
| Brandverhalten (DIN 4102) | B3 | B3 | B3 | B3 | B3 | B3 | B3 | B3 |
| Aushärtung am Bandende | 3 | 2 | 1 | 1-2 | 1-2 | 1-2 | 1-2 | 1-2 |
| Lunkerhäufigkeit | 3 | 2-3 | 1-2 | 2 | 1-2 | 1-2 | 2 | 2 |
| Schaumstruktur | 2 | 2 | 2 | 2 | 2 | 2 | 2 | 2 |

**Tabelle 4**

| | Vergleichsbeispiel 6 | Beispiel 17 | Beispiel 18 | Beispiel 19 | Beispiel 20 | Beispiel 21 | Beispiel 22 |
|---|---|---|---|---|---|---|---|
| Polyol 2 | 51,15 | 51,15 | 51,15 | 51,15 | 51,15 | 51,15 | 51,15 |
| Polyol 9 | 5 | 5 | 5 | 5 | 5 | 5 | 5 |
| Glycerin | 4,5 | 4,5 | 4,5 | 4,5 | 4,5 | 4,5 | 4,5 |
| Dipropylenglykol | 0,2 | 0,2 | 0,2 | 0,2 | 0,2 | 0,2 | 0,2 |
| Polyol 20 | | 5 | | | | | |
| Polyol 23 | | | 5 | | | | |
| Polyol 24 | | | | 5 | | | |
| Polyol 25 | | | | | 5 | | |
| Polyol 27 | | | | | | 10 | 5 |
| Flammschutzmittel 1 | 20 | 20 | 20 | 20 | 20 | 20 | 20 |
| Flammschutzmittel 2 | 5 | 5 | 5 | 5 | 5 | 5 | 5 |
| Flammschutzmittel 3 | 12,5 | 12,5 | 12,5 | 12,5 | 12,5 | 12,5 | 12,5 |
| Stabilisator 4 | 1,3 | 1,3 | 0,5 | 0,5 | 0,5 | 0,5 | 0,5 |
| Stabilisator 5 | 0,5 | 0,5 | 0,5 | 0,5 | 0,5 | 0,5 | 0,5 |
| Katalysator 5 | 3,1 | 3,1 | 3,1 | 3,1 | 3,1 | 3,1 | 3,1 |
| Wasser | 2,55 | 2,55 | 2,55 | 2,55 | 2,55 | 2,55 | 2,55 |
| n-Pentan | 6,0 | 6,0 | 6,0 | 6,0 | 6,0 | 6,0 | 6,0 |
| | | | | | | | |
| Mischungsverhältnis 100: | 126 | 126 | 126 | 126 | 126 | 126 | 126 |
| Startzeit [s] | 17 | 16 | 17 | 18 | 18 | 17 | 17 |
| Abbindezeit [s] | 45 | 44 | 45 | 46 | 46 | 44 | 45 |
| Rohdichte [g/l] | 40 | 41 | 40 | 40 | 39 | 40 | 40 |
| Elementdicke [mm] | 120 | 120 | 120 | 120 | 120 | 120 | 120 |
| Offenzelligkeit [%] | 8 | 9 | 11 | 10 | 10 | 9 | 11 |
| Bolzentest [N] | 120 | 185 | 194 | 201 | 203 | 231 | 206 |
| Brandverhalten (DIN 4102) | B2 | B2 | B2 | B2 | B2 | B2 | B2 |
| Aushärtung am Bandende | 3 | 2 | 1-2 | 1-2 | 1-2 | 1 | 1-2 |
| Lunkerhäufigkeit | 3 | 2 | 1-2 | 1-2 | 2 | 1-2 | 1-2 |
| Schaumstruktur | 2 | 2 | 2 | 2 | 22 | 2 | 2 |

**Tabelle 5**

| | Vergleichsbeispiel 7 | Beispiel 23 | Beispiel 24 | Beispiel 25 | Beispiel 26 | Beispiel 27 |
|---|---|---|---|---|---|---|
| Polyol 11 | 31,14 | 31,14 | 31,14 | 31,14 | 31,14 | 31,14 |
| Polyol 12 | 38,47 | 38,47 | 38,47 | 38,47 | 38,47 | 38,47 |
| Polyol 24 | | 2 | | | | |
| Polyol 25 | | | 5 | 4,5 | | |
| Polyol 26 | | | | | 5 | |
| Polyol 27 | | | | | | 5 |
| Dipropylenglykol | 20,25 | 20,25 | 20,25 | 20,25 | 20,25 | 20,25 |
| Ethylenglykol | 3,3 | 3,3 | 3,3 | 3,3 | 3,3 | 3,3 |
| Stabilisator 6 | 3,12 | 3,12 | 3,12 | 3,62 | 3,12 | 3,12 |
| Katalysator 2 | 0,32 | 0,32 | 0,32 | 0,32 | 0,32 | 0,32 |
| Katalysator 6 | 2,93 | 2,93 | 2,93 | 2,93 | 2,93 | 2,93 |
| Wasser | 0,47 | 0,47 | 0,47 | 0,47 | 0,47 | 0,47 |
| Cyclopentan | 17 | 17 | 17 | 17 | 17 | 17 |
| | | | | | | |
| Mischungsverhältnis 100: | 300 | 300 | 300 | 300 | 300 | 300 |
| Startzeit | 18 | 17 | 18 | 16 | 19 | 18 |
| Abbindezeit | 29 | 30 | 29 | 29 | 31 | 30 |
| Rohdichte | 69 | 70 | 69 | 69 | 69 | 70 |
| Elementdicke [mm] | 80 | 80 | 80 | 80 | 80 | 80 |
| Offenzelligkeit [%] | 7 | 8 | 6 | 7 | 5 | 7 |
| Brandverhalten (DIN 4102) | B3 | B3 | B3 | B3 | B3 | B3 |
| Aushärtung am Bandende | 3 | 2-3 | 1-2 | 1-2 | 1-2 | 1 |
| Lunkerhäufigkeit | 3 | 2-3 | 1-2 | 1 | 1 | 1-2 |
| Schaumstruktur | 2 | 2 | 2 | 2 | 2 | 2 |

Eingesetzte Rohstoffe:
- Polyol 1:: Polyetheralkohol auf Basis von Sorbit, Propylenoxid, Hydroxylzahl: 500 mgKOH/g
- Polyol 2:: Polyetheralkohol auf Basis von Saccharose, Glycerin und Propylenoxid, Hydroxylzahl: 490 mgKOH/g
- Polyol 3:: Polyetheralkohol auf Basis von Saccharose, Pentaerythrit, Diethylenglykol und Propylenoxid, Hydroxylzahl: 400 mgKOH/g
- Polyol 4:: Polyetheralkohol aus vicinalem Toluylendiamin, Ethylenoxid und Propylenoxid, Hydroxylzahl: 400 mgKOH/g
- Polyol 5:: Polyetheralkohol auf Basis von Saccharose, Diethylenglykol und Propylenoxid, Hydroxylzahl: 440 mgKOH/g
- Polyol 6:: Polyetheralkohol auf Basis von Propylenglykol und Propylenoxid, Hydroxylzahl: 105 mgKOH/g
- Polyol 7:: Polyetheralkohol auf Basis von Sorbitol und Propylen-oxid, Hydroxylzahl: 340 mgKOH/g
- Polyol 8:: Polyesteralkohol auf Basis technische Dimerfettsäure, Glycerol, Hydroxylzahl: 400 mgKOH/g
- Polyol 9:: Polyetheralkohol auf Basis von Ethylendiamin und Propylenoxid, Hydroxylzahl: 770 mgKOH/g
- Polyol 10:: Polyetheralkohol auf Basis von Propylenglykol und Propylenoxid, Hydroxylzahl: 250 mgKOH/g
- Polyol 11:: Polyestheralkohol hergestellt aus Adipinsäure, Phthalsäureanhydrid, Ölsäure und 1,1,1-Trimethylolpropan, Hydroxylzahl 385 mgKOH/g
- Polyol 12:: Polyetheralkohol auf Basis von Glycerin, Ethylenoxid und Propylenoxid, Hydroxylzahl: 35 mgKOH/g
- Polyol 13:: Polyetheralkohol auf Basis von Trimethylolpropan und Propylenoxid, Hydroxylzahl: 160 mgKOH/g
- Polyol 14:: Polyetheralkohol auf Basis von Toluylendiamin, Ethylenoxid und Propylenoxid, Hydroxylzahl: 160 mgKOH/g
- Polyol 15:: Polyetheralkohol auf Basis von Glycerin, Ethylenglykol, Ethylenoxid und Propylen-oxid, Hydroxylzahl: 48 mgKOH/g
- Polyol 16:: Monofumarate Ester mit einer Hydroxylzahl von 18,8 mgKOH/g und einer Viskosität von 7400 mPas, hergestellt durch Umsetzung von Maleinsäureanhydrid mit einem Polyol auf Basis von Trimethylolpropan, Propylenoxid und Ethylenoxid mit einer Hydroxylzahl von 26,6 mgKOH/g.
- Polyol 20:: Graftpolyol mit einer Hydroxylzahl von 60,2 mgKOH/g, einem Feststoffgehalt von 60 Gew.-% und einer Viskosität bei 25°C von 30000 mPa·s, hergestellt durch in situ Polymerisation Acrylnitril und Styrol in einem Masseverhältnis von 1:2 in einem Trägerpolyol auf Basis von Trimethylolpropan und Propylenoxid, Hydroxylzahl: 160 mgKOH/g
- Polyol 21:: Graftpolyol mit einer Hydroxylzahl von 77 mgKOH/g, einem Feststoffgehalt von 52 Gew.-% und einer Viskosität bei 25°C von 42000 mPa·s, hergestellt durch in situ Polymerisation Acrylnitril und Styrol in einem Masseverhältnis von 1:2 in einem Trägerpolyol auf Basis von vicinalem Toluylendiamin, Ethylenoxid und Propylenoxid, Hydroxylzahl: 160 mgKOH/g
- Polyol 22:: Graftpolyol mit einer Hydroxylzahl von 20 mgKOH/g, einem Feststoffgehalt von 45 Gew.-% und einer Viskosität bei 25°C von 9000 mPa·s, hergestellt durch in situ Polymerisation Acrylnitril und Styrol in einem Masseverhältnis von 1:2 in einem Trägerpolyol auf Basis von Glycerin, Propylenoxid und Ethylenoxid mit einer Hydroxylzahl von 35 mgKOH/g
- Polyol 23:: Graftpolyol mit einer Hydroxylzahl von 91 mgKOH/g, einem Feststoffgehalt von 41 Gew.-% und einer Viskosität bei 25°C von 3000 mPa·s, hergestellt durch in situ Polymerisation Acrylnitril und Styrol in einem Masseverhältnis von 1:2 in einem Trägerpolyol auf Basis von Trimethylolpropan und Propylenoxid, Hydroxylzahl: 160 mgKOH/g.
- Polyol 24:: Graftpolyol mit einer Hydroxylzahl von 20 mgKOH/g, einem Feststoffgehalt von 45 Gew.-% und einer Viskosität bei 25°C von 9000 mPa·s, hergestellt durch in situ Polymerisation Acrylnitril und Styrol in einem Masseverhältnis von 1:2 in einem Trägerpolyol auf Basis von Trimethylolpropan und Propylenoxid, Hydroxylzahl: 35 mgKOH/g
- Polyol 25:: Mischung aus 2 Gewichtsteilen Polyol 22 und 3 Gewichtsteilen Polyol 10
- Polyol 26:: Mischung aus 2 Gewichtsteilen Polyol 22 und 3 Gewichtsteilen Polyol 6
- Polyol 27:: Graftpolyol mit einer Hydroxylzahl von 26 mgKOH/g, einem Feststoffgehalt von 45 Gew.-% und einer Viskosität bei 25°C von 6000 mPa·s, hergestellt durch in situ Polymerisation Acrylnitril und Styrol in einem Masseverhältnis von 1:2 in einem Trägerpolyol auf Basis von Glycerin, Ethylenglykol und Propylenoxid und Ethylenoxid, Hydroxylzahl: 48 mgKOH/g
- Polyol 28:: Graftpolyol mit einer Hydroxylzahl von 28,4 mgKOH/g, einem Feststoffgehalt von 41 % und einer Viskosität bei 25°C von 4500 mPa·s, hergestellt durch in situ Polymerisation Acrylnitril und Styrol in einem Masseverhältnis von 1:2 in einem Trägerpolyol auf Basis von Glycerin und Monoetylenglycol, Ethylenoxid und Propylenoxid, Hydroxylzahl: 48 mgKOH/g
- Flammschutzmittel 1:: Trischlorpropylphosphat
- Flammschutzmittel 2:: Diethylethanphosphonat
- Flammschutzmittel 3:: Ixol® B251, Solvay AG
- Stabilisator 1:: L6900, Crompton Corp.
- Stabilisator 2:: Tegostab® B8467, Degussa AG
- Stabilisator 3:: OS340, Bayer AG
- Stabilisator 4:: Tegostab® B8466, Degussa AG
- Stabilisator 5:: Dabco® DC5103, Air Products
- Stabilisator 6:: 1:1-Gemisch aus Tegostab® B8461 und Tegostab® B8409, Degussa AG
- Katalysator 1:: N,N-Dimethylcyclohexylamin
- Katalysator 2:: Lupragen® N301, BASF Aktiengesellschaft
- Katalysator 3:: Lupragen® N600, BASF Aktiengesellschaft
- Katalysator 4:: Dabco® T, Air Products
- Katalysator 5:: KX315, Elastogran GmbH
- Katalysator 6:: 47%ige Lösung von Kaliumacetat in Ethylenglykol
- Initiator 1:: Trigonox® 121, Akzo Nobel Chemikals GmbH
- Initiator 2:: Vazo® 67, Du Pont de Nemours GmbH
- Initiator 3:: Wako® V 601, Wako Chemicals GmbH

## Patentansprüche

1. Verfahren zur Herstellung von geschlossenzelligen Polyurethan-Hartschaumstoffen durch Umsetzung von
a) Roh-MDI mit einem NCO-Gehalt von 29 bis 33 Gew.-% und einer Viskosität bei 25°C im Bereich von 150 bis 1000 mPa·s mit
b) Verbindungen mit mindestens zwei mit Isocyanatgruppen reaktiven Wasserstoffatomen in Gegenwart von
c) Katalysatoren,
d) Treibmitteln,
**dadurch gekennzeichnet, dass** die Verbindungen mit mindestens zwei mit Isocyanatgruppen reaktiven Wasserstoffatomen mindestens ein Graftpolyol, herstellbar durch in situ Polymerisation von ethylenisch ungesättigten Monomeren in Polyetheralkoholen, enthalten.

2. Verfahren nach Anspruch 1, **dadurch gekennzeichnet, dass** die Graftpolyole in einer Menge von bis zu 100 Gew.-%, bezogen auf die Komponente b, eingesetzt werden.

3. Verfahren nach Anspruch 1, **dadurch gekennzeichnet, dass** die Graftpolyole in einer Menge von 0,5 bis 70 Gew.-%, jeweils bezogen auf die Komponente b, eingesetzt werden.

4. Verfahren nach Anspruch 1, **dadurch gekennzeichnet, dass** die Graftpolyole bei der Herstellung von Polyurethan-Hartschaumstoffen für den Einsatz in Kühlgeräten in einer Menge von 3 bis 70 Gew.-%, bezogen auf die Komponente b, eingesetzt werden.

5. Verfahren nach Anspruch 1, **dadurch gekennzeichnet, dass** die Graftpolyole bei der Herstellung von Polyurethan-Hartschaumstoffen für den Einsatz in Sandwich-Elementen in einer Menge von 0,5 bis 35 Gew.-%, bezogen auf die Komponente b, eingesetzt werden.

6. Verfahren nach Anspruch 1, **dadurch gekennzeichnet, dass** die Graftpolyole eine Hydroxylzahl im Bereich zwischen 20 und 120 mg KOH/g aufweisen.

7. Verfahren nach Anspruch 1, **dadurch gekennzeichnet, dass** die Verteilung der Graftpolyolpartikel ein Maximum zwischen 0,1 µm bis 8 µm aufweist.

8. Verfahren nach Anspruch 1, **dadurch gekennzeichnet, dass** die Graftpolyole eine bimodale Teilchengrößenverteilung mit zwei deutlich separierten Maxima der Polymere aufweisen.

9. Verfahren nach Anspruch 1, **dadurch gekennzeichnet, dass** die Graftpolyole durch in situ Polymerisation von ethylenisch ungesättigten Monomeren in Polyetheralkoholen mit einer Funktionalität von 2 bis 8 und einer Hydroxylzahl im Bereich zwischen 100 und 800 mgKOH/g hergestellt werden, die durch Anlagerung von Alkylenoxiden an H-funktionelle Startsubstanzen erhältlich sind, wobei die Startsubstanzen ausgewählt sind aus der Gruppe, enthaltend mehrfunktionelle Alkohole, Zuckeralkohole, aliphatische Amine und aromatische Amine.

10. Verfahren nach Anspruch 1, **dadurch gekennzeichnet, dass** die Graftpolyole durch in situ Polymerisation von ethylenisch ungesättigten Monomeren in Polyetheralkoholen, die durch basisch katalysierte Anlagerung von Alkylenoxiden an Toluylendiamin erhalten werden, herstellbar sind.

11. Verfahren nach Anspruch 1, **dadurch gekennzeichnet, dass** die Graftpolyole durch in situ Polymerisation von ethylenisch ungesättigten Monomeren in Polyetheralkoholen, die durch basische oder durch Multimetallcyanidkomplexe katalysierte Anlagerung von Alkylenoxiden an Trimethylolpropan erhalten werden, herstellbar sind.

12. Polyurethan-Hartschaumstoffe, herstellbar nach einem der Ansprüche 1 bis 10.

## Claims

1. A process for producing closed-celled rigid polyurethane foams by reacting
a) crude MDI having an NCO content of from 29 to 33% by weight and a viscosity at 25°C in the range from 150 to 1000 mPa·s with
b) compounds having at least two hydrogen atoms reactive toward isocyanate groups, in the presence of
c) catalysts, and
d) blowing agents,
which comprises the presence, among the compounds having at least two hydrogen atoms reactive toward isocyanate groups, of at least one graft polyol capable of preparation via in-situ polymerization of ethylenically unsaturated monomers in polyether alcohols.

2. The process according to claim 1, wherein the amount used of the graft polyols is up to 100% by weight, based on component b.

3. The process according to claim 1, wherein the amount used of the graft polyols is from 0.5 to 70% by weight, based in each case on component b.

4. The process according to claim 1, wherein the amount used of the graft polyols during the production of rigid polyurethane foams for use in refrigeration equipment is from 3 to 70% by weight, based on component b.

5. The process according to claim 1, wherein the amount used of the graft polyols during the production of rigid polyurethane foams for use in sandwich components is from 0.5 to 35% by weight, based on component b.

6. The process according to claim 1, wherein the graft polyols have a hydroxy value in the range from 20 to 120 mg KOH/g.

7. The process according to claim 1, wherein the graft polyol particle distribution has a maximum at from 0.1 to 8 µm.

8. The process according to claim 1, wherein the graft polyols have bimodal particle size distribution with two clearly separated maxima for the polymers.

9. The process according to claim 1, wherein the graft polyols are prepared by in-situ polymerization of ethylenically unsaturated monomers in polyether alcohols having a functionality of from 2 to 8 and having a hydroxy value in the range from 100 to 800 mg KOH/g, obtainable by an addition reaction of alkylene oxides onto H-functional starter substances, the starter substances having been selected from the group comprising polyfunctional alcohols, sugar alcohols, aliphatic amines, and aromatic amines.

10. The process according to claim 1 wherein the graft polyols can be prepared by in-situ polymerization of ethylenically unsaturated monomers in polyether alcohols which are obtained by an addition reaction of alkylene oxides onto tolylenediamine, using basic catalysis.

11. The process according to claim 1, wherein the graft polyols can be prepared by in-situ polymerization of ethylenically unsaturated monomers in polyether alcohols which are obtained by an addition reaction of alkylene oxides onto trimethylolpropane, using basic catalysis or catalysis by multimetal cyanide complexes.

12. A rigid polyurethane foam capable of production according to any of claims 1 to 10.

## Revendications

1. Procédé de fabrication de mousses dures de polyuréthane à cellules fermées par mise en réaction de
a) du MDI brut ayant une teneur en NCO de 29 à 33 % en poids et une viscosité à 25 °C dans la plage allant de 150 à 1 000 mPas avec
b) des composés comprenant au moins deux atomes d'hydrogène réactifs avec les groupes isocyanate, en présence de
c) des catalyseurs,
d) des agents gonflants,
**caractérisé en ce que** les composés comprenant au moins deux atomes d'hydrogène réactifs avec les groupes isocyanate contiennent au moins un polyol greffé, fabricable par polymérisation in situ de monomères éthyléniquement insaturés dans des polyéther-alcools.

2. Procédé selon la revendication 1, **caractérisé en ce que** les polyols greffés sont utilisés en une quantité de jusqu'à 100 % en poids, par rapport au composant b.

3. Procédé selon la revendication 1, **caractérisé en ce que** les polyols greffés sont utilisés en une quantité de 0,5 à 70 % en poids, à chaque fois par rapport au composant b.

4. Procédé selon la revendication 1, **caractérisé en ce que** les polyols greffés sont utilisés en une quantité de 3 à 70 % en poids, par rapport au composant b, lors de la fabrication de mousses dures de polyuréthane destinées à être utilisées dans des appareils de refroidissement.

5. Procédé selon la revendication 1, **caractérisé en ce que** les polyols greffés sont utilisés en une quantité de 0,5 à 35 % en poids, par rapport au composant b, lors de la fabrication de mousses dures de polyuréthane destinées à être utilisées dans des éléments sandwichs.

6. Procédé selon la revendication 1, **caractérisé en ce que** les polyols greffés présentent un indice hydroxyle compris entre 20 et 120 mg KOH/g.

7. Procédé selon la revendication 1, **caractérisé en ce que** la distribution des particules de polyol greffé présente un maximum entre 0,1 µm et 8 µm.

8. Procédé selon la revendication 1, **caractérisé en ce que** les polyols greffés présentent une distribution bimodale des tailles de particules comprenant deux maxima nettement séparés des polymères.

9. Procédé selon la revendication 1, **caractérisé en ce que** les polyols greffés sont fabriqués par polymérisation in situ de monomères éthyléniquement insaturés dans des polyéther-alcools ayant une fonctionnalité de 2 à 8 et un indice hydroxyle compris entre 100 et 800 mg KOH/g, qui peuvent être obtenus par addition d'oxydes d'alkylène sur des substances de départ à fonction H, les substances de départ étant choisies dans le groupe contenant les alcools polyfonctionnels, les polyols, les amines aliphatiques et les amines aromatiques.

10. Procédé selon la revendication 1, **caractérisé en ce que** les polyols greffés sont fabricables par polymérisation in situ de monomères éthyléniquement insaturés dans des polyéther-alcools, qui sont obtenus par addition catalysée par une base d'oxydes d'alkylène sur de la toluylènediamine.

11. Procédé selon la revendication 1, **caractérisé en ce que** les polyols greffés sont fabricables par polymérisation in situ de monomères éthyléniquement insaturés dans des polyéther-alcools, qui sont obtenus par addition catalysée par une base ou par des complexes de cyanure de plusieurs métaux d'oxydes d'alkylène sur du triméthylolpropane.

12. Mousses dures de polyuréthane, pouvant être fabriquées selon l'une quelconque des revendications 1 à 10.
